# DEMANDE DE BREVET EUROPEEN

(11) **EP 1 401 165 A1**
(43) Date de publication de la demande: **24.03.2004**
(21) Numéro de dépôt: 03292326.0
(22) Date de dépôt: 23.09.2003
(51) Int. Cl.: H04L 25/14, H04L 29/06

(54) **Procédé et dispositif pour la transmission de données via un réseau maillé**

(30) Priorité: 23.09.2002 FR 0211795
(71) Demandeur: FRANCE TELECOM SA, 75015 Paris (FR)
(72) Inventeur: Amonou, Isabelle, 35235 Thorigne Fouillard (FR); Geslin, Franck, 35000 Rennes (FR)
(74) Mandataire: Maillet, Alain

(57) **Abrégé**

La présente invention concerne un procédé de transmission de données au moyen d'un réseau maillé, incluant une étape de fragmentation FRAG desdites données en sections SECi (pour i=1 à N), une étape de transmission TR desdites sections SECi vers au moins un destinataire desdites données et une étape d'assemblage desdites sections par le destinataire pour reconstituer lesdites données.

Selon l'invention, au cours de l'étape de transmission TR, lesdites sections SECi sont transmises en boucle de façon automatique vers le destinataire.

L'invention rend possible, en prévoyant une transmission en boucle de chaque section, une récupération sélective par le destinataire de sections altérées ou perdues, alors que les protocoles connus, qui ne prévoient pas de nouvelle transmission de paquets perdus ou altérés, nécessitent une transmission convenablement ordonnée et sans erreurs de l'ensemble des données à transmettre.

## Description

La présente invention concerne un procédé de transmission de données au moyen d'un réseau de communication maillé, incluant une étape de fragmentation desdites données en sections, une étape de transmission desdites sections vers au moins un destinataire desdites données et une étape d'assemblage desdites sections par le destinataire pour reconstituer lesdites données.

De tels procédés peuvent être utilisés pour transmettre via un réseau de type Internet des méta-données de type TV Anytime, qui sont des tables de données descriptives du contenu de données audiovisuelles, lesquelles sont en outre souvent accompagnées de tables de signalisation de codage et de transport.

Dans l'état actuel de la technique, les réseaux de type Internet utilisent divers protocoles pour transmettre des données entre deux noeuds de réseau. L'un de ces protocoles, connu sous l'abréviation UDP de l'appellation anglo-saxonne "User Datagram Protocol" est particulièrement bien adapté aux communications en temps réel et peut être mis en oeuvre pour transmettre une même information simultanément à plusieurs destinataires, ce qui est particulièrement utile lorsque le réseau est utilisé en tant que médium de communication de programmes audiovisuels.

Cependant, le protocole UDP n'est pas véritablement fiable, car il arrive fréquemment que des paquets de données transmis au moyen de ce protocole subissent, du fait d'incidents se produisant en cours de transmission, des pertes, des duplications ou encore des modifications d'un ordre initial dans lequel lesdits paquets ont été émis. Une telle modification de l'ordre initial a en particulier pour conséquence qu'un assemblage dans leur ordre d'arrivée de paquets de données ne permet pas de reconstituer à l'identique un ensemble de données constitué par lesdits paquets sous une forme qui était celle dudit ensemble avant exécution de l'étape de fragmentation.

Une table de données présentant un volume important devra être fragmentée en plusieurs paquets de données en vue de sa transmission au moyen du protocole UDP, les différents paquets de données étant liés entre eux. Une disparition ou une altération d'un seul de ces paquets de données provoquera ainsi une perte de la table dans son ensemble, laquelle table devra être à nouveau transmise jusqu'à ce que l'intégralité des paquets de données formant la table soient parvenus intacts en une seule séquence convenablement ordonnée à leur destinataire, ce qui implique que le destinataire des données aura besoin d'un intervalle de temps important pour mener à bien une récupération complète desdites données au cours de l'étape d'assemblage.

L'un des buts de l'invention est de réduire le temps nécessaire à un destinataire de données transmises au moyen d'un réseau de communication maillé pour mener à bien une récupération complète desdites données, en proposant un procédé de transmission amélioré qui permet à un destinataire de telles données de remplacer individuellement des paquets de données reçus sous forme altérée ou de combler de façon sélective des vides laissés dans un ensemble de données par des paquets perdus.

En effet, un procédé de transmission de données conforme au paragraphe introductif est caractérisé selon l' invention en ce qu'au cours de l'étape de transmission, les sections sont transmises en boucle de façon périodique vers le destinataire.

L'invention rend possible, en prévoyant une transmission en boucle de chaque section, une récupération par le destinataire de sections altérées ou perdues, ladite récupération pouvant être réalisée section par section, alors que le protocole UDP, qui ne prévoit pas de nouvelle transmission de paquets perdus ou altérés, nécessite une transmission sans erreurs de l'ensemble des données à transmettre, c'est-à-dire d'une séquence complète et convenablement ordonnée formée par toutes les sections contenant lesdites données, pour garantir l'intégrité des données transmises.

Ainsi, grâce à l'invention, une exécution complète de l'étape d'assemblage ne durera que le temps nécessaire pour que chaque section parvienne intégralement au moins une fois au destinataire, alors que, selon le protocole UDP connu, l'exécution de l'étape d'assemblage devra durer aussi longtemps que le destinataire n'aura pas reçu intégralement une séquence complète et convenablement ordonnée de toutes ces sections, laquelle séquence est beaucoup plus vulnérable, du fait de sa plus grande taille, à tout incident de transmission.

Pour un même degré de fiabilité, l'exécution d'une étape de transmission de données conforme à l'invention sera donc beaucoup plus brève que l'exécution d'une étape de transmission selon le protocole UDP connu, ce qui permet de choisir, pour la transmission en boucle, un temps de cycle plus long que l'intervalle de temps séparant deux transmissions successives d'une séquence complète requises en cas de dysfonctionnement dans une transmission selon le procédé connu. Ceci offre l'avantage supplémentaire de réduire le volume de communication nécessaire au transport de ces données au moyen d'un réseau de type Internet, et donc d'augmenter la bande passante disponible sur ledit réseau.

Selon un mode de mise en oeuvre particulier de l'invention, l'étape de fragmentation inclut une étape de répartition des données en paquets contenant chacun l'une desdites sections, d'une part, et contenant un en-tête incluant un numéro attribué à ladite section et un nombre total de sections à assembler par le destinataire, d'autre part.

Une telle numérotation des différentes sections permettra au destinataire des données une identification aisée des sections qu'il aura reçues en toute intégrité, et, inversement, une identification de sections qu'il n'aura pas reçues ou qu'il aura reçues sous forme dégradée, de sorte que ledit destinataire pourra sélectionner dans les sections ultérieurement retransmises de façon périodique les seules sections qui lui sont nécessaires pour compléter l'ensemble des données reçues.

Selon une variante de l'invention, l'étape de transmission inclut une étape d'inscription, dans l'en-tête de chaque paquet de données transmis, d'un numéro de séquence représentatif du nombre de fois où la section incluse dans ledit paquet aura fait l'objet d'une transmission.

Le numéro de séquence permet de communiquer au destinataire une information relative au nombre de transmissions qui auront été nécessaires pour que le destinataire reçoive effectivement l'ensemble des données transmises. Une analyse de cette information permettra notamment d'évaluer un degré de pertinence d'un choix de paramètres de fragmentation des données en sections et d'un choix de fréquence d'émission en boucle des sections, par rapport, entre autres, à une qualité théorique et à une qualité réelle de transmission de ces tables. L'information issue du numéro de séquence pourra en outre être utilisée à des fins statistiques.

Selon une autre variante de l'invention, qui pourra être mise en oeuvre alternativement ou cumulativement avec la variante précédemment décrite, l'étape de transmission inclut une étape d'inscription d'un numéro de paquet dans l'en-tête de chaque paquet de données transmis, une succession de différents numéros de paquets définissant un ordre dans lequel les paquets correspondants auront été transmis.

Une analyse de cette information permettra, entre autres, d'évaluer un taux de pertes de données causées par des incidents de transmission et, par conséquent, d'évaluer la qualité réelle de transmission des données. L'information issue du numéro de paquet pourra notamment être utilisée à des fins statistiques.

Selon un autre mode de mise en oeuvre particulier de l'invention, dans lequel les données transmises forment au moins une table contenant des informations relatives à un programme audiovisuel, l'étape de transmission inclut une étape d'inscription, dans l'en-tête de chaque paquet de données transmis, d'un numéro de table et d'un numéro de version communs à toutes les sections incluant des données appartenant à ladite table.

Cet autre mode de mise en oeuvre particulier de l'invention est particulièrement bien adapté à des applications de transmission de tables de méta-données au moyen d'un réseau maillé, car il permet, grâce à une identification de chaque table par un numéro de table et de version, un rafraîchissement systématique et régulier du contenu de ladite table.

Dans un mode de mise en oeuvre particulièrement avantageux de l'invention, l'étape d'assemblage inclut :
. une étape de lecture de chaque section par le destinataire,
. une étape d'identification de la table à laquelle appartient ladite section, et
. une étape d'inscription de ladite section dans un espace mémoire dédié à ladite table, à une adresse qui est déterminée par le numéro de section.

Ce mode de mise en oeuvre permet une mémorisation systématique sous une forme ordonnée de chaque nouvelle section reçue par un dispositif récepteur destiné à recevoir les données transmises, et permet de reconstruire rapidement et à l'identique la table d'origine desdites sections sous la forme qui était la sienne avant exécution de l'étape de fragmentation.

Dans un mode de mise en oeuvre préféré de l'invention, l'étape d'assemblage inclut en outre :
. une étape de test destinée à établir si toutes les sections formant une même table dans une version dite courante, identifiée par le numéro de version de ladite table, ont été inscrites dans l'espace mémoire dédié à ladite table, et
. une étape de destruction d'une version antérieure de ladite table destinée à être exécutée lorsque l'étape de test aura conclu que toutes les sections formant la version courante de ladite table ont été inscrites dans l'espace mémoire dédié à ladite table.

Ce mode de mise en oeuvre préféré de l'invention permet au destinataire d'éliminer de façon systématique toute version d'une table qui aura été rendue obsolète par la réception dans son intégralité d'une nouvelle version de ladite table, ce qui permet une gestion plus efficace des ressources mémoire dont dispose le destinataire, et contribue ainsi à réduire à un minimum des coûts de mise en oeuvre du procédé de transmission de données conforme à l'invention.

L'invention concerne également, selon l'un de ses aspects matériels, un système de transmission de données au moyen d'un réseau de communication maillé, incluant des moyens de fragmentation desdites données en sections, des moyens de transmission desdites sections vers au moins un destinataire desdites données et des moyens d'assemblage desdites sections par le destinataire pour reconstituer lesdites données, procédé caractérisé en ce que les moyens de transmission incluent des moyens de transmission en boucle de façon périodique desdites sections vers le destinataire.

Dans un mode de réalisation particulier d'un tel système, les moyens de fragmentation incluront des moyens de répartition des données en paquets contenant chacun l'une desdites sections, d'une part, et contenant un en-tête incluant un numéro attribué à ladite section et un nombre total de sections à assembler par le destinataire, d'autre part.

Dans une variante de ce mode de réalisation particulier, les moyens de transmission incluront des moyens d'inscription, dans l'en-tête de chaque paquet de données transmis, d'un numéro de séquence représentatif du nombre de fois où la section incluse dans ledit paquet aura fait l'objet d'une transmission.

Dans une autre variante de ce mode de réalisation particulier, qui pourra être mise en oeuvre alternativement ou cumulativement avec la variante précédemment décrite, les moyens de transmission incluront des moyens d'inscription d'un numéro de paquet dans l'en-tête de chaque paquet de données transmis, une succession de différents numéros de paquets définissant un ordre dans lequel les paquets correspondants auront été transmis.

L'invention concerne également, selon un autre de ses aspects matériels, un dispositif émetteur destiné à transmettre des données et apte à exécuter des étapes de fragmentation desdites données en sections et de transmission desdites sections, lesquelles étapes étant incluses dans un procédé tel que décrit plus haut.

L'invention concerne également, selon encore un autre de ses aspects matériels, un dispositif récepteur apte à recevoir des données préalablement fragmentées en sections, et apte à exécuter une étape d'assemblage desdites sections incluse dans un procédé tel que décrit plus haut.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme qui décrit une exécution d'étapes de fragmentation et de répartition incluses dans un procédé conforme à l'invention,
La Fig.2 est un diagramme qui décrit une exécution d'étapes de transmission et de réception de données exécutées au moyen d'un procédé connu,
La Fig.3 est un diagramme qui décrit une exécution d'étapes de transmission et de réception de données exécutées au moyen d'un procédé conforme à l'invention,
La Fig.4 est un diagramme qui décrit une structure possible d'un paquet de données destiné à contenir une section résultant d'une exécution d'une étape de fragmentation incluse dans un procédé conforme à l'invention, et
La Fig.5 est un organigramme qui décrit un mode de mise en oeuvre possible d'une étape d'assemblage incluse dans un procédé conforme à l'invention.

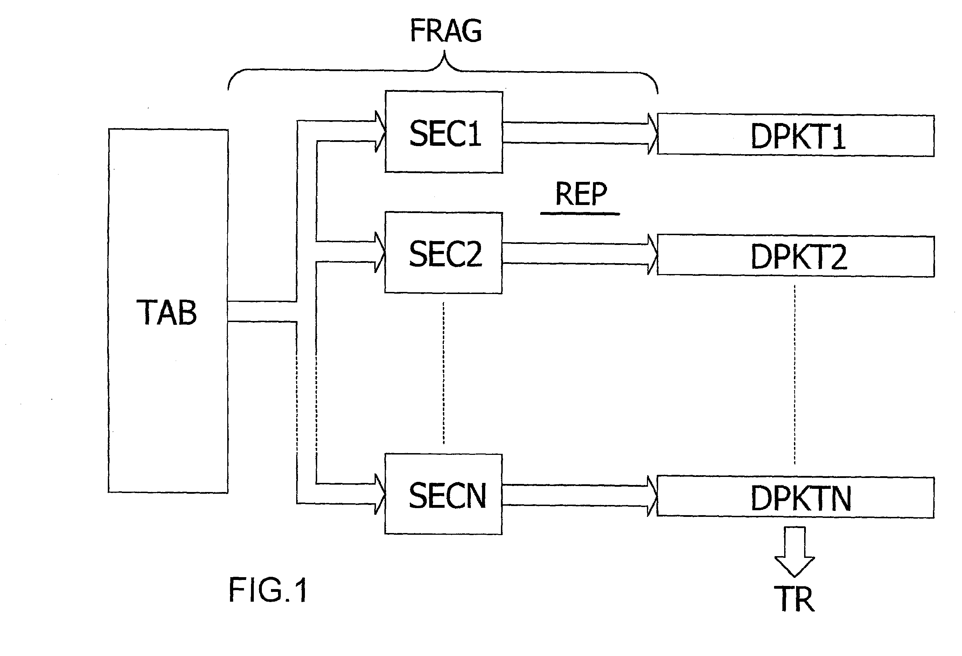

La Fig.1 représente schématiquement le déroulement d'une étape de fragmentation FRAG de données, constitutives d'une table de données TAB, en N sections SECi (pour i=1 à N) destinées à être transmises en boucle de façon périodique vers au moins un destinataire, au cours d'une étape de transmission TR.

La table de données TAB pourra par exemple être une table de méta-données de type TVAnytime, qui est descriptive du contenu de données audiovisuelles, ou encore une table de signalisation de codage et de transport qui accompagne usuellement de telles données audiovisuelles. Une telle table TAB a vocation à être diffusée sur un réseau de type Internet en même temps qu'un programme audiovisuel auquel elle est associée.

Dans ce mode de mise en oeuvre particulier de l'invention, l'étape de fragmentation FRAG inclut une étape de répartition REP des données en paquets de données DPKTi (pour i=l à N), lesquels présenteront de préférence une taille inférieure à une quantité connue sous l'abréviation MTU de l'expression anglo-saxonne "Maximum Transfer Unit" qui définit une charge de transfert unitaire maximale représentant la taille maximale de paquets de données que le réseau est apte à transmettre en un seul tenant, ce qui aura pour avantage de ne pas mettre à contribution un protocole de gestion de transfert de données propre audit réseau et assurera une gestion autonome et prévisible dudit transfert par le seul procédé conforme à l'invention.

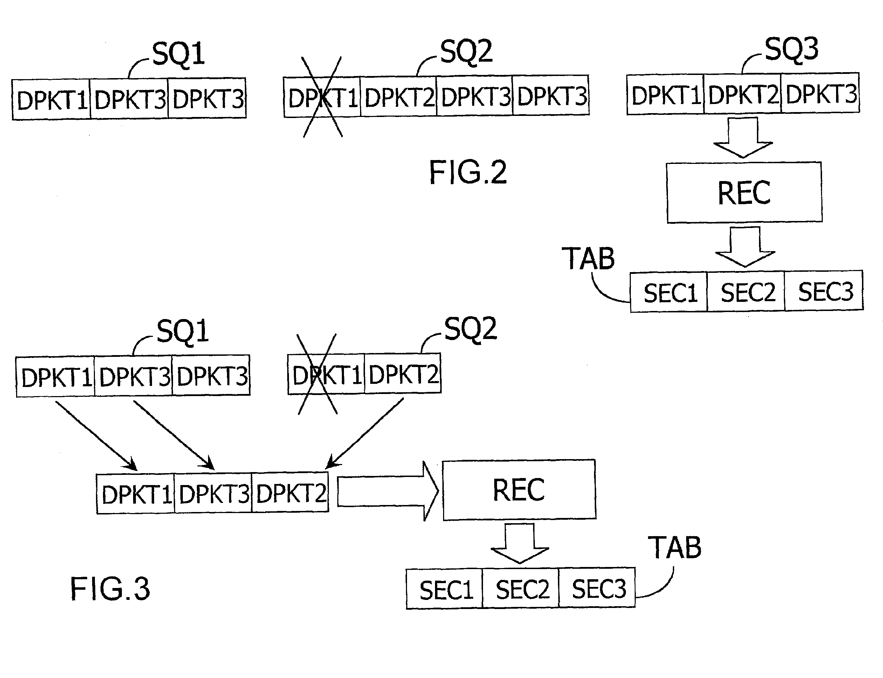

Les Figs.2 et 3 sont des diagrammes qui décrivent une exécution d'étapes de transmission et de réception de données, respectivement au moyen d'un procédé connu, et au moyen d'un procédé conforme à l'invention, et permettent d'observer les avantages offerts par l'invention. Une mise en oeuvre du procédé de transmission connu exige que toutes les sections d'une même table soient restituées au sein d'une même séquence de paquets et dans le bon ordre pour que ladite table puisse effectivement être reconstituée par son destinataire et soit réputée reçue. Ainsi, dans l'exemple décrit par les Figs.2 et 3, où la table TAB à transmettre a été fragmentée en trois sections distinctes SEC1, SEC2 et SEC3 et où les données à transmettre ont été respectivement réparties en trois paquets de données distincts DPKT1, DPKT2 et DPKT3, formant des triplets constituant chacun en théorie une séquence SQj, des incidents de transmission ont provoqué, d'une part, une apparition du paquet DPKT3 à une place initialement prévue pour le paquet DPKT2 dans la première séquence SQ1, et, d'autre part, une perte du paquet DPKT1 et une duplication du paquet DPKT3 dans la deuxième séquence SQ2, de sorte que, selon un procédé de type UDP connu, la table de données TAB ne sera réputée reçue par son destinataire qu'à l'issue d'une étape de récupération REC qui ne pourra être achevée qu'après réception de l'intégralité de la séquence SQ3, comme le montre la Fig.2, alors que le procédé conforme à l'invention permet une récupération complète de la table TAB dès que deux tiers de la deuxième séquence SQ2 telle qu'initialement envoyée auront été reçus par le destinataire, dans des circonstances identiques représentées en Fig.3.

En effet, dans un procédé de transmission de données connu de type UDP, il n'est pas prévu que les séquences soient automatiquement transmises en boucle. Un destinataire d'une telle séquence, constatant qu'elle a été altérée, devra solliciter de nouvelles transmissions de l'ensemble de la séquence jusqu'à ce qu'une séquence lui parvienne enfin dans son intégralité et convenablement ordonnée. Une telle sollicitation ne sera en outre possible que si un canal de retour existe entre le destinataire et l'émetteur de la séquence, ce qui est rarement le cas en pratique, de sorte qu'une récupération d'une séquence altérée transmise au moyen du procédé connu sera le plus souvent impossible.

L'invention rend possible, en prévoyant une transmission en boucle de chaque section, une récupération progressive par le destinataire de sections altérées ou perdues, ladite récupération pouvant être réalisée section par section. Ainsi, dans l'exemple décrit par la Fig.3, les paquets de données DPKT1 et DPKT3 seront réputés reçus dès la fin de la première séquence SQ1, le paquet manquant étant réputé reçu dès que deux tiers de la deuxième séquence SQ2 telle qu'initialement envoyée auront été reçus par le destinataire.

Grâce à l'invention, l'exécution par le destinataire de l'étape d'assemblage ne durera donc que le temps nécessaire pour que chaque section parvienne intégralement au moins une fois au destinataire, alors que, selon le protocole UDP connu, l'exécution de l'étape d'assemblage devra durer aussi longtemps que le destinataire n'aura pas reçu intégralement une séquence complète et convenablement ordonnée de toutes ces sections, laquelle séquence est beaucoup plus vulnérable, du fait de sa plus grande taille, à tout incident de transmission.

L'invention permet donc d'accélérer la récupération des données par le destinataire, ce qui permet de choisir un temps de cycle pour la transmission en boucle plus long que l'intervalle de temps séparant deux transmissions successives d'une séquence complète requises en cas de dysfonctionnement dans une transmission selon le procédé connu. Ceci offre l'avantage supplémentaire de réduire le volume de communication nécessaire au transport de ces données au moyen d'un réseau de type Internet, et donc d'augmenter la bande passante disponible sur ledit réseau.

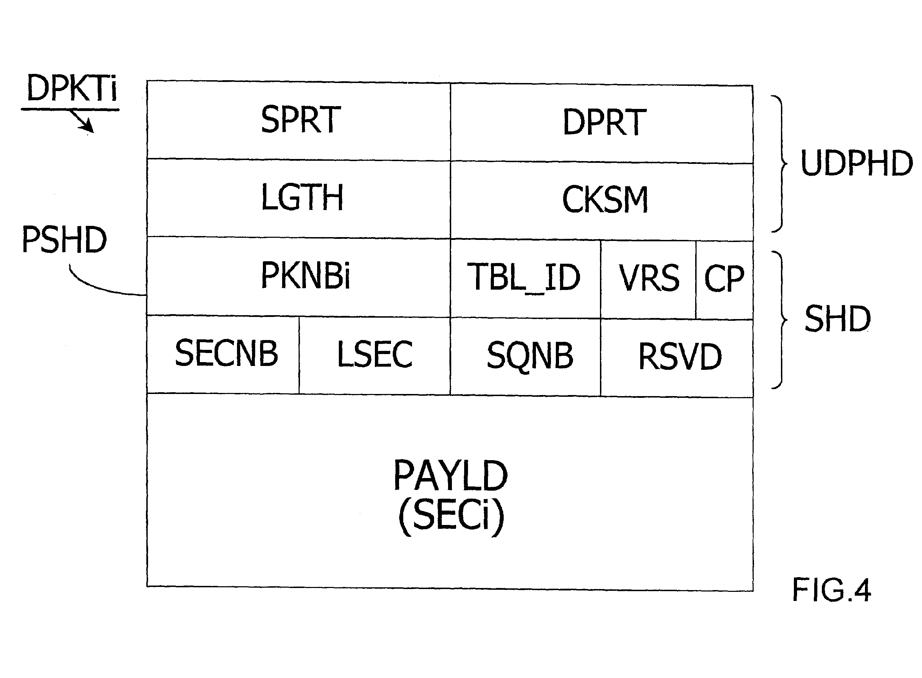

La Fig.4 représente l'une des nombreuses structures qui peuvent être attribuées à un paquet de données DPKTi destiné à contenir une section SECi résultant d'une exécution d'une étape de fragmentation incluse dans un procédé conforme à l'invention. Ce paquet de données DPKTi contient ici un premier en-tête UDP conforme au standard des en-têtes de paquets de type UDP, qui inclut quatre champs de deux octets chacun :
. un champ "port source" SPRT, qui définit une référence d'une application qui a généré les données contenues dans le paquet de données DPKTi,
. un champ "port destination" DPRT qui définit une référence d'une application destinée à exploiter les données contenues dans le paquet de données DPKTi,
. un champ "longueur" LGTH qui définit une longueur totale en octets du message transmis, en tenant compte à la fois des données et du ou des en-têtes,
. un champ de contrôle d'intégrité "checksum" CKSM, qui inclut un nombre résultant d'une somme de contrôle d'intégrité opérée sur l'en-tête et les données UDP, ainsi que sur certains champs issus d'une couche de protocole Internet appelé IP, par exemple des champs IP adresse source, adresse destination, type de protocole et longueur de données qui sont usuellement remplis par les protocoles IP et UDP.

Une somme de contrôle d'intégrité IP pourra être constituée par une somme en complément à "1" de mots de 16 bits constituant un en-tête de datagramme IP. Une somme de contrôle d'intégrité UDP pourra porter sur un pseudo-en-tête IP, un en-tête UDP et des données IP.

Le paquet de données DPKTi contient ici un pseudo-en-tête PSHD qui inclut un numéro de paquet PKNBi dudit paquet DPKTi, codé sur deux octets, une succession de différents numéros de paquets PKNB1, PKNB2,...PKNBN définissant un ordre dans lequel les N paquets correspondants DPKT1, DPKT2,...DPKTN auront été transmis.

Une analyse de l'information véhiculée par le numéro de paquet PKNBi permettra d'identifier des paquets manquants entre différents paquets effectivement reçus et, par conséquent, d'évaluer un taux de pertes de données causées par des incidents de transmission et, par conséquent, d'évaluer la qualité réelle de transmission des données. L'information issue du numéro de paquet PKNBi pourra notamment être utilisée à des fins statistiques, par exemple pour identifier et signaler des anomalies dans les conditions de transmission.

Selon un mode de réalisation avantageux par sa simplicité, le numéro de paquet PKNBi sera matérialisé par le contenu d'un compteur inclus dans un dispositif émetteur des données, lequel compteur se verra incrémenté à chaque fois que ledit dispositif procèdera à une transmission. De tels compteurs sont connus en tant que tels de l'homme du métier sous l'appellation "compteur de continuité".

Le paquet de données DPKTi contient ici un en-tête spécifique SHD, codé sur six octets, qui inclut :
. un champ TBL_ID d'identification de table "Table_id", codé sur un octet, qui permet d'identifier une table à laquelle appartient la section SECi contenue dans le paquet de données DPKTi,
. un champ VRS de numéro de version de table "Version", codé sur cinq bits, qui permet de définir sans équivoque à quelle version chronologique de ladite table appartient la section SECi contenue dans le paquet de données DPKTi,
. un champ CP destiné à contenir des informations relatives à une éventuelle compression, qui permettra d'avertir le destinataire que les données contenues dans le paquet de données DPKTi auront été compressées au moyen d'un algorithme identifié par la valeur du champ CP,
. un champ SECNB de numéro de section "Section_num", codé sur un octet, qui permet d'identifier sans équivoque la section SECi contenue dans le paquet de données DPKTi,
. un champ LSEC de dernier numéro de section "Last_Section_num", codé sur un octet, qui permet d'identifier sans équivoque le numéro N de la dernière section SECN contenue dans la table TAB, et qui permettra une initialisation d'un dispositif récepteur des paquets de données DPKTi (pour i=l à N),
. un champ SQNB de numéro de séquence dudit paquet DPKTi, codé ici sur un octet, lequel numéro de séquence SQNB est représentatif du nombre de fois où la section SECi incluse dans ce paquet de données DPKTi aura fait l'objet d'une transmission, et
. un champ RSVD réservé, qui pourra par exemple contenir des informations relatives à un éventuel cryptage.

Le contenu du champ SECNB permettra à un dispositif récepteur des paquets de données DPKTi d'assembler dans leur ordre original les différentes sections SECi qu'il est destiné à recevoir, de façon à reconstruire la table TAB en toute cohérence.

Le contenu du champ LSEC communique au dispositif récepteur des paquets de données DPKTi une valeur du nombre total des différents paquets de données qui composent une seule et même table TAB, laquelle est identifiée par son champ d'identification de table TBL_ID et par son champ de numéro de version VRS. Dans un mode de mise en oeuvre particulièrement avantageux de l'invention de par sa simplicité de réalisation, il suffira par exemple audit dispositif récepteur de compter le nombre de paquets de données différents DPKTi qu'il aura reçus pour une même table TAB et de comparer ce nombre à la valeur du champ LSEC pour déterminer si ladite table TAB a été reçue dans son intégralité ou non.

Le numéro de séquence SQNB permet de communiquer au destinataire une information relative au nombre de transmissions qui auront été nécessaires pour que le destinataire reçoive effectivement l'ensemble des données transmises. Une analyse de cette information permettra notamment d'évaluer un degré de pertinence d'un choix de paramètres de fragmentation des tables en sections et d'un choix de fréquence d'émission en boucle des sections, par rapport, entre autres, à une qualité théorique et à une qualité réelle de transmission de ces tables. L'information issue du numéro de séquence SQNB pourra en outre être utilisée à des fins statistiques.

Le paquet de données DPKTi contient enfin une charge utile PAYLD proprement dite, dans laquelle seront incluses les données constituant la section SECi. Dans le cas d'un réseau Ethernet, où la charge de transfert unitaire maximale MTU est de 1500 octets, qui correspond à la taille maximale du paquet de données DPKTi, la taille maximale de la section sera de 1484 octets si on attribue audit paquet de données DPKTi la structure décrite ci-dessus.

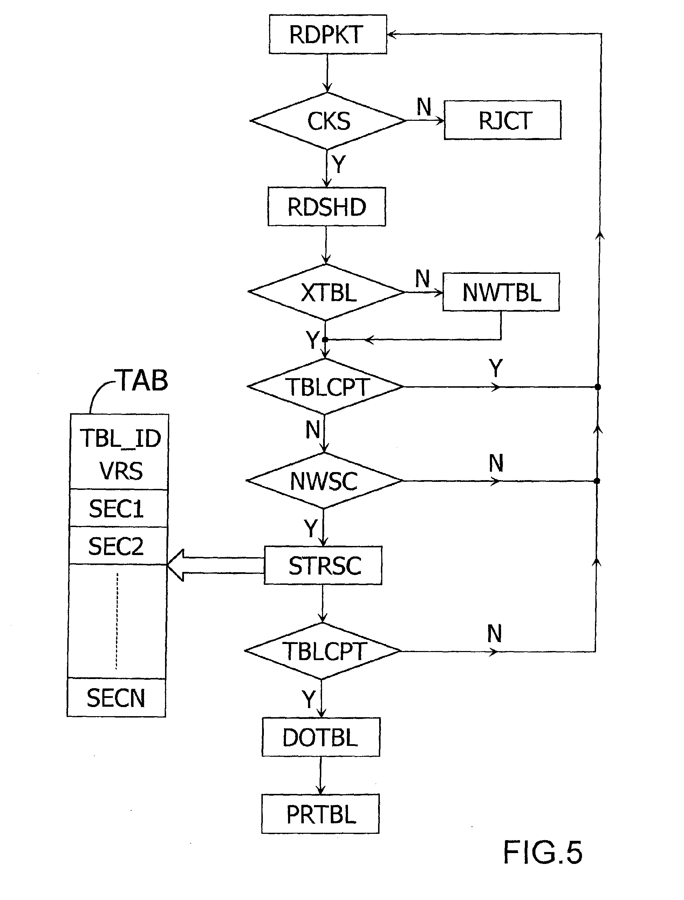

La Fig.5 représente, sous forme d'un organigramme, un algorithme décrivant un mode de mise en oeuvre possible d'une étape d'assemblage par un dispositif récepteur apte à recevoir de telles données.

Dans une première étape de lecture RDPKT, le dispositif récepteur lit un paquet de données qu'il vient de recevoir. Dans une étape de test suivante CKS, le dispositif récepteur détermine si la valeur du champ de contrôle d'intégrité est valide ou non. Si cette valeur n'est pas valide, le paquet de données sera rejeté au cours d'une étape RJCT. Si cette valeur est valide, l'en-tête spécifique SHD est lu par le dispositif récepteur au cours d'une étape suivante d'identification RDSHD, lequel dispositif récepteur en extrait une identification TBL_ID de la table TAB à laquelle appartiennent les données incluses dans la section SECi (pour i=l à N) contenue dans le paquet reçu, un numéro de version VRS de ladite table TAB, le numéro i de ladite section SECi, et le nombre total N de sections SECi composant ladite table TAB. Au cours d'une étape de test suivante XTBL, le dispositif récepteur détermine, sur la base de l'identification TBL_ID de la table TAB et de son numéro de version VRS, si cette table TAB existe déjà en mémoire. Si tel n'est pas le cas, une nouvelle table est créée en mémoire au cours d'une étape suivante NWTBL. Si la table TAB identifiée existe déjà en mémoire, le dispositif récepteur détermine au cours d'une étape de test suivante TBLCPT si la table TAB identifiée est déjà complète. Si tel est le cas, le dispositif récepteur ignorera le présent paquet de données et procèdera au cours d'une nouvelle étape de lecture RDPKT à une lecture d'un nouveau paquet de données. S'il ressort de l'étape de test TBLCPT que la table TAB identifiée est incomplète, le dispositif récepteur détermine au cours d'une étape de test suivante NWSC si le paquet de données en cours de traitement contient une section SECi qui n'a pas encore été reçue. Si tel n'est pas le cas, le dispositif récepteur ignorera le présent paquet de données et procèdera au cours d'une nouvelle étape de lecture RDPKT à une lecture d'un nouveau paquet de données. S'il ressort de l'étape de test NWSC que la section SECi contenue dans le paquet de données n'a pas encore été reçue par le dispositif récepteur, le contenu de ladite section SECi sera enregistré, au cours d'une étape suivante d'inscription STRSC , dans une zone mémoire SECi (pour i=l à N) incluse dans un espace mémoire attribué à la table TAB précédemment identifiée. Le dispositif récepteur détermine au cours d'une étape de test suivante TBLCPT si la table TAB identifiée est à présent complète. Si tel est le cas, le dispositif récepteur pourra procéder au cours d'une étape suivante de destruction DOTBL à une destruction d'une ancienne version de ladite table TAB, puis à une exploitation de la nouvelle version de cette table TAB au cours d'une étape de traitement PRTBL. S'il ressort de la dernière étape de test TBLCPT que la table TAB identifiée est incomplète, le dispositif récepteur procèdera au cours d'une nouvelle étape de lecture RDPKT à une lecture d'un nouveau paquet de données.

## Revendications

1. Procédé de transmission de données au moyen d'un réseau maillé, incluant une étape de fragmentation desdites données en sections, une étape de transmission desdites sections vers au moins un destinataire desdites données et une étape d'assemblage desdites sections par le destinataire pour reconstituer lesdites données, lesdites sections étant transmises en boucle de façon automatique vers le destinataire au cours de l'étape de transmission, procédé **caractérisé en ce que** l'étape de fragmentation inclut une étape de répartition des données en paquets contenant chacun l'une desdites sections, d'une part, et contenant un en-tête incluant un numéro attribué à ladite section et un nombre total de sections à assembler par le destinataire, d'autre part.

2. Procédé de transmission de données selon la revendication 1, dans lequel l'étape de transmission inclut une étape d'inscription, dans l'en-tête de chaque paquet de données transmis, d'un numéro de séquence représentatif du nombre de fois où la section incluse dans ledit paquet aura fait l'objet d'une transmission.

3. Procédé de transmission de données selon l'une des revendications 1 ou 2, dans lequel l'étape de transmission inclut une étape d'inscription d'un numéro de paquet dans l'en-tête de chaque paquet de données transmis, une succession de différents numéros de paquets définissant un ordre dans lequel les paquets correspondants auront été transmis.

4. Procédé de transmission de données selon l'une des revendications 1 à 3, dans lequel, les données transmises formant au moins une table contenant des informations relatives à un programme audiovisuel, l'étape de transmission inclut une étape d'inscription, dans l'en-tête de chaque paquet de données transmis, d'un numéro de table et d'un numéro de version communs à toutes les sections incluant des données appartenant à ladite table.

5. Procédé de transmission de données selon la revendication 4, dans lequel l' étape d'assemblage inclut :
. une étape de lecture de chaque section par le destinataire,
. une étape d'identification de la table à laquelle appartient ladite section, et
. une étape d'inscription de ladite section dans un espace mémoire dédié à ladite table, à une adresse qui est déterminée par le numéro de section.

6. Procédé de transmission de données selon la revendication 5, dans lequel l'étape d'assemblage inclut en outre :
. une étape de test destinée à établir si toutes les sections formant une même table dans une version dite courante, identifiée par le numéro de version de ladite table, ont été inscrites dans l'espace mémoire dédié à ladite table, et
. une étape de destruction d'une version antérieure de ladite table destinée à être exécutée lorsque l'étape de test aura conclu que toutes les sections formant la version courante de ladite table ont été inscrites dans l'espace mémoire dédié à ladite table.

7. Système de transmission de données incluant des moyens de fragmentation desdites données en sections, des moyens de transmission desdites sections vers au moins un destinataire desdites données et des moyens d'assemblage desdites sections par le destinataire pour reconstituer lesdites données, les moyens de transmission incluant des moyens de transmission en boucle de façon automatique desdites sections vers le destinataire, système **caractérisé en ce que** les moyens de fragmentation incluent des moyens de répartition des données en paquets contenant chacun l'une desdites sections, d'une part, et contenant un en-tête incluant un numéro attribué à ladite section et un nombre total de sections à assembler par le destinataire, d'autre part.

8. Système de transmission de données selon la revendication 7, dans lequel les moyens de transmission incluent des moyens d'inscription, dans l'en-tête de chaque paquet de données transmis, d'un numéro de séquence représentatif du nombre de fois où la section incluse dans ledit paquet aura fait l'objet d'une transmission.

9. Système de transmission de données selon l'une des revendications 7 ou 8, dans lequel les moyens de transmission incluent des moyens d'inscription d'un numéro de paquet dans l'en-tête de chaque paquet de données transmis, une succession de différents numéros de paquets définissant un ordre dans lequel les paquets correspondants auront été transmis.

10. Dispositif émetteur destiné à transmettre des données et apte à exécuter des étapes de fragmentation desdites données en sections et de transmission desdites sections vers au moins un destinataire, lesquelles étapes étant incluses dans un procédé conforme à l'une des revendications 1 à 4.

11. Dispositif récepteur apte à recevoir des données préalablement fragmentées en sections, et apte à exécuter une étape d'assemblage desdites sections incluse dans un procédé conforme à l'une des revendications 1 à 6.
